## Europäisches Patentamt
## European Patent Office
## Office européen des brevets

(19)

(11) Numéro de publication: **0 226 509**
**B1**

(12)

# FASCICULE DE BREVET EUROPEEN

(45) Date de publication du fascicule du brevet:
**25.10.89**

(51) Int. Cl.⁴: **B60T 8/18**

(21) Numéro de dépôt: **86402683.6**

(22) Date de dépôt: **03.12.86**

(54) Correcteur de freinage à rapport variable en fonction de la charge d'un véhicule.

(30) Priorité: **11.12.85 FR 8518345**

(43) Date de publication de la demande:
**24.06.87 Bulletin 87/26**

(45) Mention de la délivrance du brevet:
**25.10.89 Bulletin 89/43**

(84) Etats contractants désignés:
**DE ES GB IT**

(56) Documents cités:
**EP-A- 0 053 528**
**EP-A- 0 072 331**
**EP-A- 0 076 567**
**DE-A- 2 557 714**
**DE-A- 2 655 546**
**FR-A- 2 367 638**
**GB-A- 1 547 785**
**GB-A- 2 017 243**

(73) Titulaire: **BENDIX France, 126, rue de Stalingrad,
F-93700 Drancy(FR)**

(72) Inventeur: **Pressaco, Pierre, 45 rue Emile Zola Bât.C.,
F-93120 La Courneuve(FR)**

(74) Mandataire: **Lejet, Christian et al, Division Technique
Service Brevets BENDIX Europe 126, rue de Stalingrad,
F-93700 Drancy(FR)**

## Description

La présente invention se rapporte aux correcteurs de freinage à rapport variable pour véhicules automobiles.

On connaît du document EP-A 0 076 567 un correcteur de freinage comprenant un boîtier pourvu de deux alésages parallèles, deux pistons montés coulissant dans lesdits alésages, l'un des pistons délimitant dans le boîtier une chambre d'entrée à relier à une source de fluide sous pression et l'autre piston coopérant avec une valve commandant l'écoulement de fluide entre la chambre d'entrée et une chambre de sortie à relier à au moins un moteur de frein, les deux pistons faisant saillie hors du boîtier et coopérant avec les deux extrémités d'un balancier monté articulé sur le boîtier, l'axe d'articulation étant mobile en fonction de la charge du véhicule.

Ce dispositif présente l'inconvénient que, lors d'un freinage sévère, la pression hydraulique agissant sur le balancier a tendance bloquer l'axe d'articulation, contrariant ainsi le déplacement du mécanisme relié à la suspension du véhicule. Si la suspension du véhicule est en outre sujette à un choc ou un cahot, lors d'un freinage prononcé, le mécanisme, n'ayant pas sa totale liberté de mouvement, risque d'être endommagé gravement.

La présente invention a donc pour objet de proposer un correcteur de freinage à rapport variable du type ci-dessus évitant les inconvénients sus-mentionnés en incorporant un dispositif à échappement réversible dans le mécanisme.

Pour ce faire, l'invention propose un correcteur de freinage à rapport variable comprenant, en outre, un dispositif à échappement réversible, le mécanisme comprenant au moins deux éléments, couplés à pivotement l'un à l'autre, l'un étant couplé à l'axe d'articulation, l'autre étant sollicité vers une position de repos par un moyen de ressort.

D'autres caractéristiques et avantages de la présente invention ressortiront de la description suivante d'un mode de réalisation donné à titre illustratif mais nullement limitatif, faite en relation avec les dessins annexés ; dans lesquels :

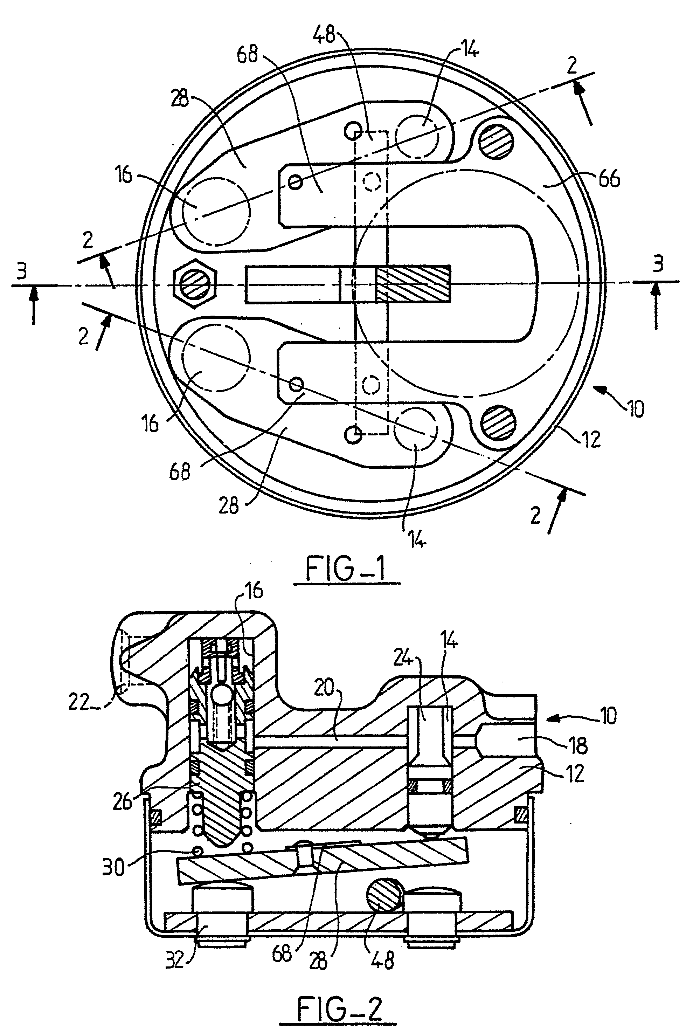

La Figure 1 est une vue en coupe suivant le plan de coupe I-I de la Figure 3, d'un correcteur de freinage selon l'invention ;

La Figure 2 est une vue en coupe, suivant une des lignes 2-2, (les deux lignes de coupe étant identiques), de la figure 1 ;

La Figure 3 est une vue en coupe, suivant la ligne 3-3, du correcteur de la figure 1 ; et

La Figure 4 est une vue en coupe, analogue à celle de la figure 3, montrant le dispositif à échappement dans sa position d'échappement.

Comme représenté sur les figures, un correcteur de freinage 10, dans l'exemple illustré un correcteur double, comprend un boîtier 12 percé de deux paires identiques d'alésages borgnes parallèles 14 et 16. Un orifice d'entrée respectif 18 communique avec l'alésage 14 et l'alésage 16, par l'intermédiaire d'un conduit respectif 20. Un orifice de sortie respectif communique avec le fond de l'alésage 16.

Dans chaque alésage 14 est monté coulissant de manière étanche un piston de réaction 24. Dans chaque alésage 16 est monté coulissant un piston de correcteur 26 de type connu en soi dont la structure ne sera pas décrite en détail.

Le correcteur comprend, en outre, un balancier respectif 28 agencé de façon à coopérer avec les pistons 24 et 26 qui font saillie hors du boîtier 12. Un ressort 30 est monté sur l'extrémité du piston 26 faisant saillie hors du boîtier 12 et prend appui contre le balancier 28, le sollicitant vers une butée 32 sur un fond rapporté sur le boîtier 12.

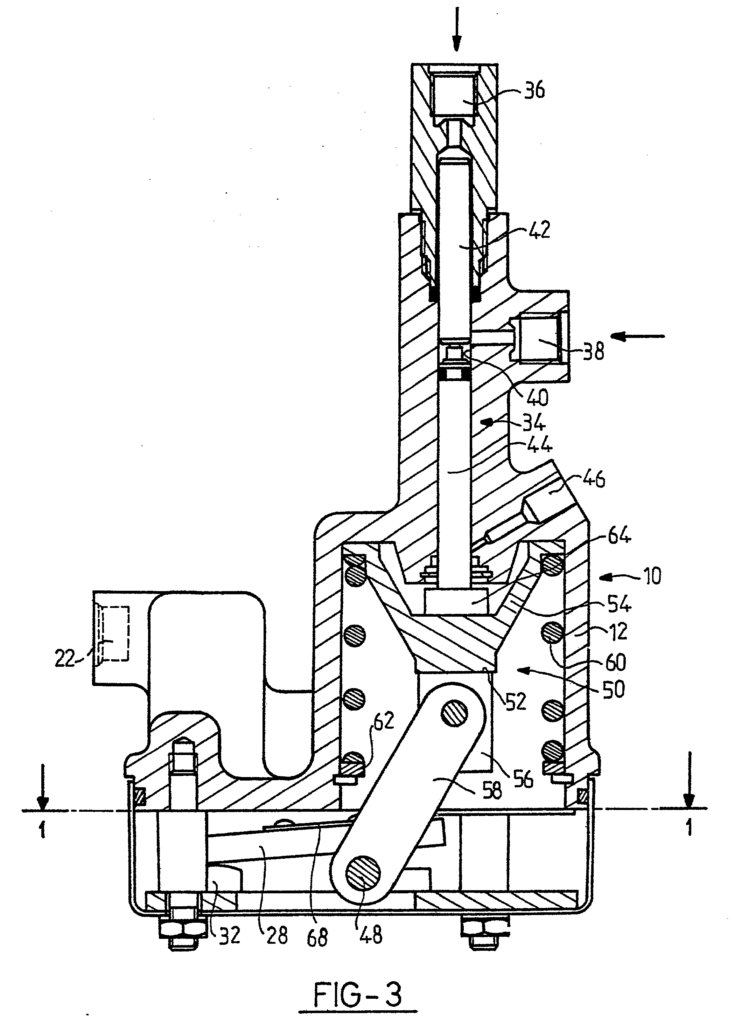

Comme représenté sur la figure 3, le correcteur comprend un dispositif d'asservissement hydraulique 34 pourvu de deux entrées hydrauliques 36 et 38 reliées, indépendamment l'une de l'autre, à la suspension du véhicule (non représentée). Les deux entrées sont reliées à un alésage 40 dans lequel sont montés à coulissement étanche deux pistons alignés coopérants 42 et 44.

Le fond de l'alésage 40, communique avec l'atmosphère par l'intermédiaire d'une sortie 46.

Le correcteur est pourvu d'un axe d'articulation 48 susceptible de se déplacer par rapport aux balanciers 28 de manière à faire varier le rapport du correcteur. Selon l'invention, le correcteur comprend un dispositif à échappement réversible 50 entre le piston 44 du dispositif d'asservissement hydraulique et l'axe d'articulation 48. Le dispositif à échappement réversible 50 comprend un premier élément 52 comportant une extrémité 54 de forme sensiblement cônique et une tige 56. Une biellette de liaison 58 est montée à pivotement par une de ses extrémités sur la tige 56 et son autre extrémité pivote sur l'axe 48. Un ressort 60 est monté entre une butée 62 fixe dans le boîtier 12 et la partie cônique 54 du premier élément 52 et sollicite ce dernier vers sa position de repos représentée sur la figure 3. Une tête 64, sur l'extrémité du piston 44 faisant saillie hors de l'alésage 40, prend appui contre l'extrémité 54 du premier élément 52. Le correcteur comprend, de plus, un ressort-lame 66 sensiblement en forme de U, dont la partie centrale du U est montée fixe dans le boîtier 12 et chaque bras 68 du U est connecté à un balancier 28 respectif. En configuration inactive du correcteur, le ressort-lame 66 relève les deux balanciers 28, afin de réduire les frottements sur l'axe d'articulation 48.

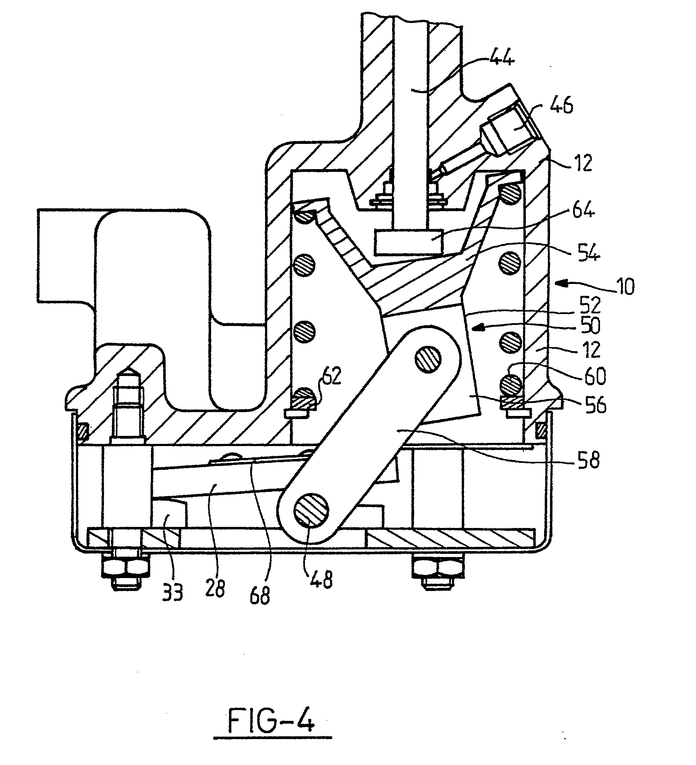

Le correcteur ainsi décrit fonctionne de la manière suivante. Le dispositif d'asservissement hydraulique se déplace vers le bas (en regardant les dessins) à l'encontre de la force du ressort 60 provoquant la rotation de la biellette de liaison 58 et le déplacement de l'axe d'articulation 48 vers la gauche (en regardant les dessins) étant donné que ce dernier est contraint à glisser sur le fond rapporté sur boîtier 12. Ce déplacement de l'axe d'articulation 48 fait varier le rapport du correcteur selon la charge du véhicule. Lors d'un freinage prononcé, la pression hydraulique agissant sur le balancier 28 par l'intermédiaire des pistons 24 et 26 exerce une force sur l'axe d'articulation 48 tendant à le bloquer. Une variation ultérieure de la charge du véhicule, lors du freinage, par exemple à la suite d'un cahot, déplacera le piston 44 vers le bas. L'axe d'articulation 48 étant supposé bloqué, le dispositif à échappement réversible 50 se déplace à l'encontre du ressort 60 et adopte la position représentée sur la figure 4. Le dispositif 50 reprendra sa position de repos sous l'effet du ressort 60, soit lors du relâchement du freinage, soit lors du retour du dispositif d'asservissement hydraulique 34. L'endommagement du dispositif est ainsi totalement évité.

L'agencement du dispositif à échappement réversible présente, également, l'avantage que la relation entre la charge sur le dispositif d'asservissement hydraulique 34 et la pente de la courbe de répartition du freinage est linéaire.

## Revendications

1/ Correcteur de freinage à rapport variable pour un véhicule comprenant un boîtier (12) pourvu d'au moins deux alésages parallèles (14,16), au moins deux pistons (24,26) un monté coulissant dans chaque alésage, les deux pistons faisant saillie hors du boîtier et coopérant avec les deux extrémités d'un balancier (28) monté articulé par rapport au boîtier (12), l'axe d'articulation (48) du balancier (28) étant déplaçable par un mécanisme relié à la suspension du véhicule pour faire varier le rapport du correcteur en fonction de la charge du véhicule, caractérisé en ce que le correcteur comprend, en outre, un dispositif à échappement (50) qui bascule réversiblement en cas de choc dans le mécanisme, ce dispositif comprenant au moins deux éléments (52,58) articulés l'un sur l'autre, l'un (58) étant couplé à l'axe d'articulation (48), l'autre (52) étant sollicité vers une position de repos par un ressort de rappel (60).

2/ Correcteur de freinage selon la revendication 1 caractérisé en ce que le mécanisme relié à la suspension comprend au moins un piston (44) déplaçable en fonction de la charge du véhicule, l'autre élément (52) étant susceptible d'être actionné par le piston (44) et, dans sa position de repos, étant sollicité vers une position sensiblement alignée avec le piston (44) par le moyen de ressort (60).

3/ Correcteur de freinage selon la revendication 2 caractérisé en ce que l'autre élément (52) comprend une extrémité de forme sensiblement cônique (54) sur lequel le piston (44) et le moyen de ressort (60) prennent respectivement appui.

4/ Correcteur de freinage selon une des revendications 1 à 3 caractérisé en ce qu'il comprend, en outre, un deuxième moyen de ressort 66 relié au balancier (28) et agencé de façon à dégager le balancier de l'axe d'articulation (48) en configuration inactive du correcteur.

## Patentansprüche

1. Bremskraftregler mit veränderlichem Übersetzungsverhältnis für ein Fahrzeug, mit einem Gehäuse (12), das mit mindestens zwei parallelen Bohrungen (14, 16) versehen ist, mindestens zwei Kolben (24, 26), von denen jeweils einer in einer Bohrung gleitbar ist, wobei die beiden Kolben aus dem Gehäuse vorstehen und mit den beiden Enden eines Schwinghebel (28) zusammenwirken, der bezüglich des Gehäuses (12) schwenkbar gelagert ist, wobei die Schwenkachse (48) des Schwinghebels (28) bezüglich eines mit der Fahrzeugaufhängung verbundenen Mechanismus verschiebbar ist, um das Übersetzungsverhältnis des Bremskraftreglers in Abhängigkeit von der Fahrzeuglast zu verändern, dadurch gekennzeichnet, daß der Bremskraftregler ferner eine Ablaßvorrichtung (50) aufweist, die im Fall eines Stoßes in dem Mechanismus in umkehrbarer Weise kippt, wobei diese Vorrichtung mindestens zwei Elemente (52, 58) aufweist, die aneinander angelenkt sind, wobei das eine Element (58) mit der Schwenkachse (48) verbunden ist und das andere Element (52) von einer Rückholfeder (60) in Richtung auf eine Ruhestellung vorgespannt ist.

2. Bremskraftregler nach Anspruch 1, dadurch gekennzeichnet, daß der mit der Fahrzeugaufhängung verbundene Mechanismus mindestens einen Kolben (44) aufweist, der in Abhängigkeit von der Fahrzeuglast verschiebbar ist, wobei das andere Element (52) durch den Kolben (44) betätigbar ist und in seiner Ruhestellung durch die Feder (60) in Richtung auf eine zu dem Kolben (44) im wesentlichen ausgerichtete Stellung vorgespannt wird.

3. Bremskraftregler nach Anspruch 2, dadurch gekennzeichnet, daß das andere Element (52) ein im wesentlichen konisch ausgebildetes Ende (54) aufweist, an dem der Kolben (44) bzw. die Feder (60) angreift.

4. Bremskraftregler nach einem der Ansprüche 1 bis 3, dadurch gekennzeichnet, daß er ferner eine zweite Feder (66) aufweist, die mit dem Schwinghebel (28) verbunden ist und so ausgebildet ist, daß sie im Aus-Betriebszustand des Bremskraftreglers den Schwinghebel von der Schwenkachse (48) löst.

## Claims

1. Variable-ratio breaking corrector for a vehicle, comprising a housing (12) provided with at least two parallel bores (14, 16), and at least two pistons (24, 26), one mounted slideably in each bore, the two pistons projecting from the housing and cooperating with the two ends of a rocker (28) mounted in an articulated manner relative to the housing (12), the hinge pin (48) of the rocker (28) being displaceable by means of a mechanism connected to the vehicle suspension, to vary the ratio of the corrector as a function of the vehicle load, characterized in that the corrector also comprises a reversible escape device (50) in the mechanism, comprising at least two elements (52, 58) coupled pivotably to one another, one (58) being coupled to the hinge pin (48) and the other (52) being stressed toward a position of rest by a spring means (60).

2. Breaking corrector according to Claim 1, characterized in that the mechanism connected to the suspension comprises at least one piston (44) displaceable as a function of the vehicle load, the other element (52) being capable of being actuated by the piston (44) and, in its rest position, being stressed towards a position substantially aligned with the piston (44) by the spring means (60).

3. Breaking corrector according to Claim 2, characterized in that the other element (52) comprises a substantially conical end (54), on which the piston (44) and the spring means (60) bear respectively.

4. Breaking corrector according to any of Claims 1 to 3, characterized in that it also comprises a second spring means (66) connected to the rocker (28) and designed to free the rocker from the hinge pin (48) when the corrector is in inactive configuration.

FIG-1

FIG-2

EP 0 226 509 B1

FIG-3

FIG-4